# EUROPÄISCHE PATENTSCHRIFT

(11) **EP 0 520 227 B1**
(45) Veröffentlichungstag und Bekanntmachung des Hinweises auf die Patenterteilung: **17.01.1996**
(21) Anmeldenummer: 92109603.8
(22) Anmeldetag: 06.06.1992
(51) Int. Cl.: C08K 13/02, C08L 77/00

(54) **Flammgeschützte thermoplastische Polyamidformmassen**
Flame resistant thermoplastic polyamide moulding compositions
Masses à mouler thermoplastiques ignifugées à base de polyamides

(30) Priorität: 27.06.1991 DE 4121261
(43) Veröffentlichungstag der Anmeldung: 30.12.1992
(73) Patentinhaber: BASF Aktiengesellschaft, D-67063 Ludwigshafen (DE)
(72) Erfinder: Gareiss, Brigitte, Dr., W-6700 Ludwigshafen (DE); Baierweck, Petra, Dr., W-6707 Schifferstadt (DE)

(56) Entgegenhaltungen:
- EP-A- 0 112 542
- EP-A- 0 255 901
- DE-A- 3 900 460

## Beschreibung

Die Erfindung betrifft flammgeschützte thermoplastische Formmassen enthaltend
A) 30 - 98 Gew.-% eines thermoplastischen Polyamids,
B) 1 - 30 Gew.-% Phosphor,
C) 1 - 15 Gew.-% einer monophenolischen Verbindung mit mindestens 10 C-Atomen der allgemeinen Formel I 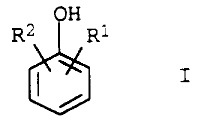 wobei
   - R¹, R: gleiche oder verschiedene Reste Wasserstoff, ein C₁-C₁₆-Alkyl ein C₆-C₁₈-Aryl- oder ein C₇-C₂₀-Aralkylradikal bedeuten, wobei jedes der Radikale mit wenigstens einer C₁-C₁₂-Alkylgruppe oder einem Halogenatom substituiert und das Arylradikal über -O-, C₁-C₃-Alkylen oder -SO₂-Brückenglieder verbunden sein kann, oder R¹ und R miteinander verbunden sind zu einem aromatischen oder cycloaliphatischen carbocyclischen Ring
   mit der Maßgabe, daß nicht beide Reste R¹ und R in o-Stellung zur phenolischen OH-Gruppe stehen,
   oder diphenolische Verbindung der allgemeinen Formel II 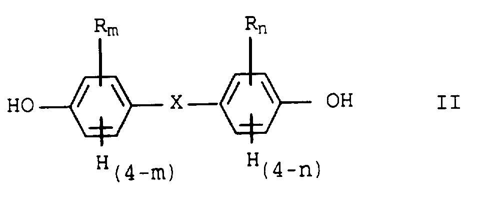 wobei
   - R: für eine CH₃-, CH₃-O-, C₂H₅-Gruppe steht,
   - m und n: unabhängig voneinander ganze Zahlen von 0 - 4, und
   - X: eine chemische Bindung , einen C₁-C₇-Alkylen-, oder C₅-C₆-Cycloalkylenrest, O, S, SO, SO₂, CO oder O-(CH₂)ₚ-O-mit p = 2 - 10 bedeutet
   mit der Maßgabe, daß die Summe der aliphatischen C-Atome aller an die Phenolringe gebundenen Reste R < 6, ist, oder deren Mischungen,
D) 0 - 60 Gew.-% eines faser- oder teilchenförmigen Füllstoffes oder deren Mischungen und
E) 0 - 30 Gew.-% eines kautschukelastischen Polymerisates

Darüber hinaus betrifft die Erfindung die Verwendung derartiger flammgeschützter thermoplastischer Formmassen zur Herstellung von Fasern, Folien und Formkörpern und die aus den erfindungsgemäßen Formmassen erhältlichen Formkörper.

Aus den EP-A 224 847, EP-A 240 887 und EP-A 112 542 sind Polyamidformmassen bekannt, welche mono- oder diphenolische Verbindungen enthalten.

Ausweislich dieser Schriften weisen diese Polyamidformmassen bei Umsatz von mono- oder diphenolischen Verbindungen verbesserte Eigenschaften insbesondere im Hinblick auf Fließfähigkeit, reduzierte Wasseraufnahme und Zähigkeit auf. Keinerlei Hinweise finden sich in diesen Anmeldungen jedoch im Hinblick auf die Flammschutzausrüstung von derartigen Polyamidformmassen.

Aus der DE-A-39 00 460 ist der Zusatz sterisch gehinderter Phenole zur Wärmestabilisierung bekannt.

Der vorliegenden Erfindung lag daher die Aufgabe zugrunde, flammgeschützte thermoplastische Polyamidformmassen zur Verfügung zu stellen, die ein gutes Brandverhalten und insbesondere eine hohe Phosphorstabilität aufweisen.

Demgemäß wurden die eingangs definierten Formmassen gefunden.

Bevorzugte Formmassen dieser Art und ihre Verwendung sind den Unteransprüchen zu entnehmen.

Als Komponente A) enthalten die erfindungsgemäßen Formmassen 30 bis 98, bevorzugt 40 bis 97 und insbesondere 40 bis 96 Gew.-% eines thermoplastischen Polyamids.

Die Polyamide der erfindungsgemäßen Formmassen weisen im allgemeinen eine relative Viskosität ηᵣₑ₁ von 1,7 bis 5,0 auf, bestimmt in einer 1 gew.-%igen Lösung in 96 gew.%iger Schwefelsäure bei 25°C, was einem K-Wert (nach Fikentscher) von 50 bis 96 entspricht. Polyamide mit einer relativen Viskosität von 2,3 bis 4,5, insbesondere von 2,5 bis 4,0 werden bevorzugt verwendet.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Als bevorzugte Komponente A) enthalten die erfindungsgemäßen thermoplastischen Formmassen teilaromatische, teilkristalline Copolyamide, aufgebaut aus:
A₁) 20 - 90 Gew.-% Einheiten, die sich von Terephthalsäure und Hexamethylendiamin ableiten,
A₂) 0 - 50 Gew.-% Einheiten, die sich von ε-Caprolactam ableiten und
A₃) 0 - 80 Gew.-% Einheiten, die sich von Adipinsäure und Hexamethylendiamin ableiten,
A₄) 0 - 40 Gew.-% weiteren polyamidbildenden Monomeren,
   wobei der Anteil der Komponente (A₂) oder (A₃) oder (A₄) oder deren Mischungen mindestens 10 Gew.-% beträgt.

Die Komponente A₁) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte X₁ bis X₅ festgelegten Fünfecks liegt, wobei die Punkte X₁ bis X₅ folgendermaßen definiert sind:
- X₁: 40 Gew.-% Einheiten A₁)
60 Gew.-% Einheiten A₃)
- X₂: 60 Gew.-% Einheiten A₁)
40 Gew.-% Einheiten A₃)
- X₃: 80 Gew.-% Einheiten A₁)
5 Gew.-% Einheiten A₂)
15 Gew.-% Einheiten A₃)
- X₄: 80 Gew.-% Einheiten A₁)
20 Gew.-% Einheiten A₂)
- X₅: 50 Gew.-% Einheiten A₁)
50 Gew.-% Einheiten A₂)

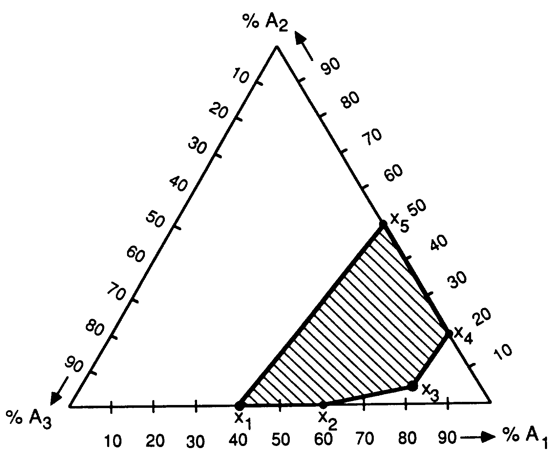

In der Abbildung ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten A₁) und 20 bis 50, vorzugsweise 25 bis 40 Gew.-% Einheiten, die sich von ε-Caprolactam ableiten (Einheiten A₂)) enthalten, erwiesen.

Neben den vorstehend beschriebenen Einheiten A₁) bis A₃) können die teilaromatischen Copolyamide in Mengen bis 40, vorzugsweise 10 - 30 Gew.-% und insbesondere 20 - 30 Gew.-% an weiteren polyamidbildenden Monomeren A₄) enthalten; wie sie von anderen Polyamiden bekannt sind.

Aromatische Dicarbonsäuren A₄) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyidicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure, Phenoxyterephthalsäure, wobei Isophtalsäure besonders bevorzugt sind.

Weitere polyamidbildende Monomere A₄) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:
A₁) 65 bis 85 Gew.-% Einheiten, die sich von Terephthalsäure und Hexamethylendiamin ableiten und
A₄) 15 bis 35 Gew.-% Einheiten, die sich von Isophthalsäure und Hexamethylendiamin ableiten
   oder
A₁) 50 bis 70 Gew.-% Einheiten, die sich von Terephthalsäure und Hexamethylendiamin ableiten und
A₃) 10 bis 20 Gew.-% Einheiten, die sich von Adipinsäure und Hexamethylendiamin ableiten und
A₄) 20 bis 30 Gew.-% Einheiten, die sich von Isophthalsäure und Hexamethylendiamin ableiten.

Enthält die Komponente (A₄) symmetrische Dicarbonsäuren, bei denen die Carboxylgruppen in para-Stellung stehen, so empfiehlt es sich, diese mit (A₁) und (A₂) oder (A₁) und (A₃) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 325°C, bevorzugt von 280 bis 310°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und (im trockenen Zustand) eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsäure und Hexamethylendiamin (HMD) Schmelzpunkte von 300°C und mehr, wobei die Glastemperatur nicht ganz so hoch liegt wie bei binären Copolyamiden, die anstelle von Adipinsäure bzw. Adipinsäure/HMD ε-Caprolactam enthalten.

Bei den teilaromatischen Copolyamide sollen erfindungsgemäß solche verstanden werden, die einen Kristallinitätsgrad > 10 %, bevorzugt > 15 %, und insbesondere > 20 % aufweisen.

Der Kristallinitätsgrad ist ein Maß für den Anteil an kristallinen Fragmenten im Copolyamid und wird durch Röntgenbeugung bestimmt.

Die Herstellung der bevorzugten teilaromatischen Copolyamide mit niedrigem Triamingehalt kann nach den in den EP-A 129 195 und 129 196 beschriebenen Verfahren erfolgen.

Die erfindungsgemäßen Formmassen enthalten als Komponente (B) 1 bis 30 Gew.-%, bevorzugt 1 bis 20 und insbesondere 2 bis 10 Gew.% roten oder schwarzen Phosphor.

Bevorzugtes Flammschutzmittel (B) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet sind.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Jedoch sollte der Anteil des Konzentratpolymeren nicht mehr als 35 Gew.% bezogen auf das Gewicht der Komponenten (A) und (B) in der erfindungsgemäßen Formmasse betragen.

Die mittlere Teilchengröße (d₅₀) der in den Formmassen verteilten Phosphorpartikel liegt bevorzugt im Bereich von 0,0001 bis 0,5 mm; insbesondere von 0,001 bis 0,2 mm.

Der Gehalt der Komponente B) in den erfindungsgemäßen Formmassen beträgt 1 bis 30, bevorzugt 2 bis 20 und insbesondere 2 bis 10 Gew.-%, bezogen auf die Summe der Komponenten A) bis C).

Als Komponente C) enthalten die erfindungsgemäßen Formmassen 1 bis 15, bevorzugt 1 bis 12 und insbesondere 2 bis 8 Gew.-% einer mono- oder diphenolischen Verbindung der allgemeinen Formel I oder II, oder deren Mischungen.

Geeignete Monophenole C) mit mindestens 10 C-Atomen sind solche der allgemeinen Formel I 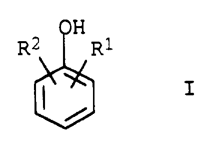 wobei
- R1, R: gleiche oder verschiedene Reste, Wasserstoff, C₁-c₁₆-Alkyl, ein C₆-C₁₈-Aryl oder ein C₇-C₂₀-Aralkylradikal bedeuten,
wobei jedes der Radikale mit wenigstens einer C₁-C₁₂-Alkylgruppe oder einem Halogenatom substituiert und das Arylradikal über -0-, C₁-C₃-Alkylen- oder -SO₂-Brückenglieder verbunden sein kann oder

R1 und R miteinander verbunden sind zu einem aromatischen oder cycloaliphatischen carbocyclischen Ring mit 5 bis 12 Atomen mit der Maßgabe, daß nicht beide Reste R¹ und R in o-Stellung zur phenolischen OH-Gruppe stehen.

Besonders bevorzugt sind höhermolekulare bzw. langkettige Phenole mit > C₁₀, wie ein- oder mehrfach C₁-C₁₂-Alkyl- und/oder C₇-C₁₅-Aralkyl substituierte Monophenole mit 10 bis 22 C-Atomen, die maximal in einer o-Stellung zur OH-Gruppe substituiert sein dürfen, oder gegebenenfalls mit mindestens einer C₁-C₆-Alkyl-Gruppe substituierte Hydroxy-di- oder Tri-phenyle, deren Ringe gegebenenfalls über -O-, C₁-C₃-Alkylen oder -SO₂ Brückenglieder verbunden sein können und die höchstens in einer o-Stellung zur OH-Gruppe substituiert sein dürfen.

Beispielhaft seien folgende monophenolischen Verbindungen I genannt:

Tetrahydronaphthol, 2-Butyl-phenol (sek. und tert.), 4-t-Butylphenol, Thymol, 4-tert.-Pentylphenol, Octylphenol(gemische), Nonylphenol(gemische), Dodecyl-phenol(gemische), 4-Hydroxydiphenyl, 2-Hydroxydiphenyl, mit Alkylgruppen substituierte Hydroxydiphenyle, wie sie z.B. in der DOS 19 43230 beschrieben sind, 1-Naphthol, 2-Naphthol, Benzylphenol(e), Benzyl-Kresol(e), 2-Phenyl-2-(4-hydroxyphenyl)-propan, 4-Hydroxydiphenylsulfon, 4-Hydroxydiphenylether, 2- oder 4-Cyclohexylphenole oder deren Mischungen, wobei 4-t-Butylphenol besonders bevorzugt ist.

Als Komponente C) sollen erfindungsgemäß Diphenole der allgemeinen Formel II verstanden werden 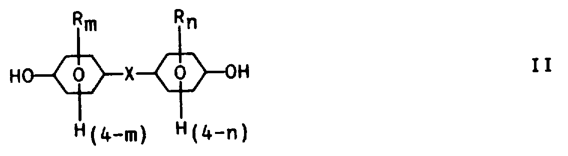 wobei
m und n unabhängig voneinander ganze Zahlen von 0 bis 4, vorzugsweise 0, 1, 2 besonders bevorzugt 0 bedeuten,
R für eine Methyl-, Methoxy- und Ethylgruppe, vorzugsweise eine Methylgruppe stehen,
X eine chemische Bindung oder ein bivalenter, aliphatischer C₁-C₇-, vorzugsweise C₁-C₃-, cycloaliphatischer C₅-C₆-Kohlenwasserstoffrest oder ein Brückenglied wie O, S, SO, SO₂, CO bzw. -O(CH₂)ₚO- mit p=2-10, vorzugsweise 2 oder 4 bedeutet,
mit der Maßgabe, daß die Summe der aliphatischen C-Atome aller an einem Phenolring gebundenen Reste R < 6, vorzugsweise < 3 ist.
X ist bevorzugt eine chemische Bindung ein C₁-C₃-Alkylenrest, O, S, SO₂, besonders bevorzugt -CH₂, -C(CH₃)₂- oder -SO₂-.

Beispiele für die erfindungsgemäßen Diphenole C) sind:
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone und
α,α-Bis-(hydroxyphenyl)-diisopropylbenzole.

Bevorzugte Verbindungen sind beispielsweise:
4,4'-Dihydroxydiphenyl, gegebenenfalls im Gemisch mit
2,4'-Dihydroxydiphenyl
4,4'-Dihydroxy-3,3',5,5'-tetramethyldiphenyl
4,4'-Dihydroxy-3,3'-dimethylphenyl
Bis-(4-hydroxyphenyl)-methan
Bis-(4-hydroxy-3,5-dimethylphenyl)-methan
Bis-(4-hydroxyphenyl)-ethan
2,2-Bis-(4-hydroxyphenyl)propan ("Bisphenol A")
2,2-Bis-(4-hydroxyphenyl-3,5-dimethylphenyl)-propan
2,2-Bis-(4-hydroxy-3,3'-dimethylphenyl)-propan
1,1-Bis-(4-hydroxyphenyl)-cyclohexan
1,1-Bis-(4-hydroxy-3,5-dimethylphenyl)-cyclohexan
Bis-(4-hydroxyphenyl)-sulfon
Bis-(4-hydroxy-3,3'-dimethylphenyl)-sulfon
Bis-(4-hydroxy-3,3-dimethylphenyl)-sulfon
Bis-(4-hydroxyphenyl)-sulfid
Bis-(4-hydroxy-3,5-dimethylphenyl)-sulfid
Bis-(4-hydroxy-3,5-dimethylphenyl)-sulfid
Bis-(4-hydroxyphenyl)-oxid
Bis-(4-hydroxy-3,5-dimethylphenyl)-oxid
Bis-(4-hydroxyphenyl)-keton
Bis-(4-hydroxy-3,5-dimethylphenyl)-keton
Bis-(4-hydroxy-3,5-dimethylphenyl)-propan.

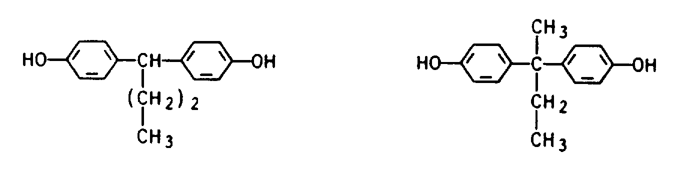

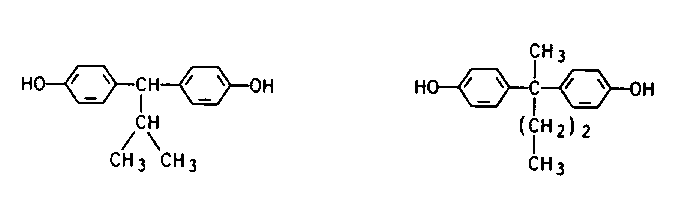

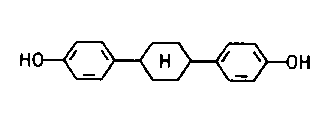

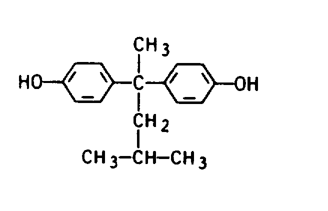

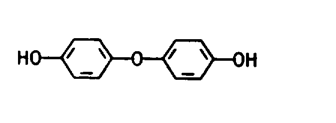

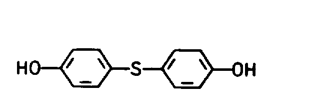

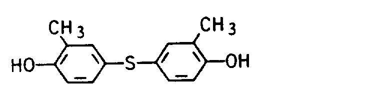

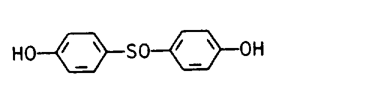

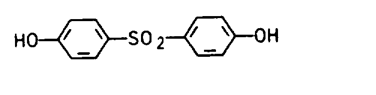

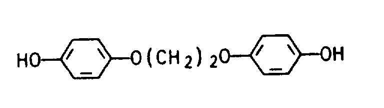

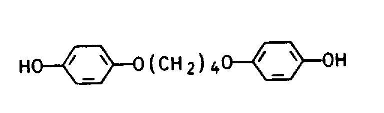

Besonders geeignete Diphenole sind:
Bis-(4-hydroxyphenyl)-methan
Bis-(4-hydroxy-3,5-dimethylphenyl)-methan
2,2-Bis-(4-hydroxyphenyl)-propan
2,2-Bis-(4-hydroxy-3,5-dimethylphenyl)-propan
2,2-Bis-(4-hydroxy-3,3'-dimethylphenyl)-propan
1,1-Bis-(4-hydroxyphenyl)-cyclohexan
Bis-(4-hydroxyphenyl)-sulfon
Bis-(4-hydroxy-3,5-dimethylphenyl)-sulfon
Bis-(4-hydroxyphenyl)-sulfid.

Ganz besonders bevorzugt sind
Bis-(4-hydroxyphenyl)-methan und
Bis-(4-hydroxyphenyl)-propan.

Die letztgenannten Produkte können auch in ihrer Rohqualität, d.h. verunreinigt mit den entsprechenden 2,4-Isomeren sowie mit kleinen Mengen Bisphenolen mit Indan-Struktur, Chromanstruktur und auch den homologen Dreikerntrisphenolen eingesetzt werden.

Selbstverständlich können auch Mischungen der Diphenole eingesetzt werden sowie Mischungen von mono- und diphenolischen Verbindungen I und II.

Als weiteren Bestandteil können die erfindungsgemäßen Formmassen 0 bis 60, vorzugsweise 1 bis 50, insbesondere 10 bis 40 und ganz besonders 20 bis 30 Gew.% eines faser- oder teilchenförmigen Füllstoffes (Komponente (D)) oder deren Mischungen enthalten.

Bevorzugte faserförmige Verstärkungsstoffe (Komponente (D)) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Als Komponente (E) können die erfindungsgemäßen thermoplastischen Formmassen 0 bis 30, vorzugsweise 0,5 bis 20 und insbesondere 1 bis 15 Gew.-% eines kautschukelastischen Polymerisats enthalten.

Bevorzugte kautschukelastische Polymerisate sind Polymerisate auf Basis von Olefinen, die aus folgenden Komponenten aufgebaut sind:
e₁) 40-100 Gew.-% mindestens eines α-Olefins mit 2-8 C-Atomen
e₂) 0-50 Gew.-% eines Diens
e₃) 0-45 Gew.-% eines C₁-C₁₂-Alkylesters der Acrylsäure oder Methacrylsäure oder Mischungen derartiger Ester,
e₄) 0-40 Gew.-% einer ethylenisch ungesättigen Mono-oder Dicarbonsäure oder einem funktionellen Derivat einer solchen Säure
e₅) 0-40 Gew.-% eines Epoxygruppen enthaltenden Monomeren,
e₆) 0-5 Gew.-% sonstiger radikalisch polymerisierbaren Monomerer,

mit der Maßgabe, daß die Komponente (E) kein Olefinhomopolymerisat ist.

Als erste bevorzugte Gruppe sind die sogenannten Ethylen-Propylen-(EPM)-bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere e₂) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von α-Olefinen mit 2-8 C-Atomen, insbesondere des Ethylens, mit C₁-C₁₈-Alkylestern der Acrylsäure und/oder Methacrylsäure.

Grundsätzlich eignen sich alle primären und sekundären C₁-C₁₈-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester e₃) an den Olefinpolymerisaten beträgt 0-60, vorzugsweise 10-50 und insbesondere 30-45 Gew.-%.

Anstelle der Ester e₃) oder zusätzlich zu diesen können in den Olefinpolymerisaten auch Säurefunktionelle und/oder latent säurefunktionelle Monomere ethylenisch ungesättigter Mono- oder Dicarbonsäuren e₄) oder Epoxygruppen aufweisende Monomere e₅) enthalten sein.

Als Beispiele für Monomere e₄) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut.

R₁C(COOR₂)=C(COOR₃)R₄ (I)

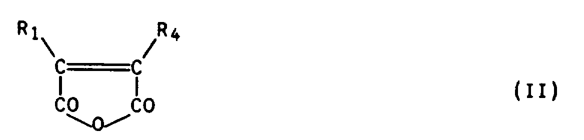

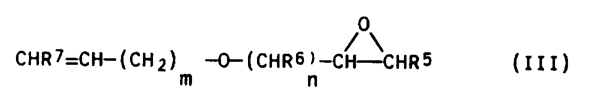

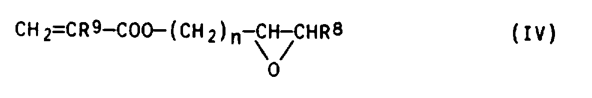

wobei die Reste R¹ - R⁹ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R¹ - R⁷ ist Wasserstoff, für m der Wert 0 oder 1 und für n der Wert 1. Die entsprechenden Verbindungen sind Maleinsäure, Fumarsäure, Maleinsäureanhydrid, e₄) bzw. Alkenylglycidylether oder Vinylglycidylether e₅).

Bevorzugte Verbindungen der Formeln I, II, III und IV sind Maleinsäure und Maleinsäureanhydrid als Komponente e₄) und Epoxygruppen-enthaltende Ester der Acrylsäure und/oder Methacrylsäure, wobei Glycidylacrylat und Glycidylmethacrylat (als Komponente e₅) besonders bevorzugt werden.

Der Anteil der Komponenten e₄) bzw. e₅) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus
- 50 bis 98,9: insbesondere 60 bis 95 Gew.% Ethylen,
- 0,1 bis 20,: insbesondere 0,15 bis 15 Gew.% Glycidylacrylat und/oder Glycidylmethacrylat, Acrylsäure und/oder Maleinsäureanhydrid,
- 1 bis 45,: insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i-Butylester.

Als sonstige Monomere e₆) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere (E) beispielsweise die folgenden Polymerisate.

In erster Linie sind hier Emulsionspolymerisate zu nennen, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung des Kautschukteils der Elastomeren seien Acrylate wie n-Butylacrylat und 2-Ethylhexylacrylat, entsprechende Methacrylate, Butadien und Isopren sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 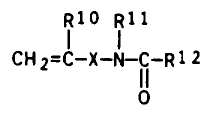 eingeführt werden können,
wobei die Substituenten folgende Bedeutung haben können:
- R¹⁰: Wasserstoff, oder eine C₁-C₄-Alkylgruppe,
- R¹¹: Wasserstoff, eine C₁-C₈-Alkylgruppe oder eine Arylgruppe, insbesondere Phenyl,
- R¹: Wasserstoff, eine C₁-C₁₀-Alkyl-, eine C₆-C₁₂-Arylgruppe oder OR¹³,
- R¹³: eine C₁-C₈-Alkyl- oder C₆-C₁₂-Arylgruppe, die gegebenenfalls mit O- oder N-haltigen Gruppen substituiert sein können,
- X: eine chemische Bindung, eine C₁-C₁₀-Alkylen- oder C₆-C₁₂-Arylengruppe oder 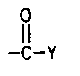
- Y: O-Z- oder NH-Z und
- Z: eine C₁-C₁₀-Alkylen- oder C₆-C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentodienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine Doppelbindung mit etwa gleicher Geschwindigkeit wie die übrigen Monomeren polymerisiert, während der restliche Teil der Doppelbindungen deutlich langsamer polymerisiert. Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (E) bis zu 5 Gew.%, vorzugsweise nicht mehr als 3 Gew.%, bezogen auf (E).

Im folgenden seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| E/1 | Buta-1,3-dien, Isopren, n-Butylacrylat, Ethylhexylacrylat oder deren Mischungen | Styrol, Acrylnitril, Methylmethacrylat |
| E/2 | wie E/1 aber unter Mitverwendung von Vernetzern | wie E/1 |
| E/3 | wie E/1 oder E/2 | n-Butylacrylat, Ethylacrylat, Methylacrylat, Buta-1,3-dien, Isopren, Ethylhexylacrylat |
| E/4 | wie E/1 oder E/2 | wie E/1 oder E/3 aber unter Mitverwendung von Monomeren mit reaktiven Gruppen wie hierin beschrieben |
| E/5 | Styrol, Acrylnitril, Methylmethacrylat oder deren Mischungen | erste Hülle aus Monomeren wie unter E/1 und E/2 für den Kern beschrieben |
| | | zweite Hülle wie unter E/1 oder E/3 für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)-acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere (E) können auch nach anderen üblichen Verfahren, z.B. durch Suspensionspolymerisation, hergestellt werden.

Neben den wesentlichen Komponenten A) bis C) und gegebenenfalls D) und E) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten (A) bis (C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone (Stearon® der Firma Henkel) eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen zeichnen sich durch gute mechanische Eigenschaften aus.

Zusätzlich weisen sie eine gute Flammbeständigkeit, Kriechstromfestigkeit und eine sehr gute Phosphorstabilität auf.

Infolge dieses Eigenschaftsspektrums eignen sich die aus den erfindungsgemäßen Formmassen herstellbaren Formkörper besonders für elektrische und elektronische Bauteile, z.B. Elektromotorteile (Motorschutzschalter, Leistungsschütze), Elektroheizgeräte oder Gehäuseteile für Hochspannungsschalter. Glasfaserverstärkte Formkörper werden vor allem als Stecker, Steckverbindungen oder Leitungsbuchsen im Telekommunikatiosnbereich verwendet.

### Beispiele

Zur Herstellung der erfindungsgemäßen Formmassen wurden folgende Komponenten eingesetzt:

### Komponente A/1

Polyamid-6.6 (Polyhexamethylenadipinsäureamid) mit einer Viskositätszahl von 151 ml/g, entsprechend einer relativen Viskosität ηᵣₑₗ von 2,7 (gemessen in 96 gew.-%iger H₂SO₄ als 0,5 gew.-%ige Lösung nach ISO 307).

### Komponente A/2

Ein teilaromatisches Copolyamid, aufgebaut aus
A₁) 70 Gew.-% Einheiten, die sich von Terephthalsäure und Hexamethylendiamin ableiten und
A₂) 30 Gew.-% Einheiten, die sich von ε-Caprolactam ableiten.

Die Viskositätszahl nach ISO 307 betrug 141 ml/g (gemessen in 96 gew.-%iger H₂SO₄ als 0,5 gew.-%ige Lösung bei 25°C).

### Komponente B

Roter Phosphor der mittleren Teilchengröße (d₅₀) von 45 µm.

### Komponente C/1

4-Butylphenol

### Komponente C/2

Bisphenol A (2,2-Bis-(4-hydroxyphenylpropan)

### Komponente D

Glasfasern mit einem mittleren Durchmesser von 10 µm.

### Komponente E

Ein Olefinpolymerisat aus
60 Gew.-%-Ethylen
35 Gew.-% n-Butylacrylat
4,3 Gew.-% Acrylsäure
0,7 Gew.-% Maleinsäureanhydrid
mit einem MFI von 10 g/10 min bei 190°C und 1,16 kg Belastung.

### Komponente F

Zinkoxid

### Herstellung der Formmassen

Die Komponenten A) bis F) wurden auf einen Zweischneckenextruder (120 U/min; 30 kg/h) bei 280 bis 330°C konfektioniert, verstrangt und im Wasserbad gekühlt sowie granuliert. Das Granulat wurde bei 80°C im Vakuum getrocknet und bei 280°C zu Normprüfkörpern auf eine Spritzgußmaschine verarbeitet.

Das Brandverhalten wurde nach UL 94 an 1/16 Zollstäben geprüft.

Zur Messung der Phosphorstabilitäten wurden Prüfkörper in einem Wasserbad bei 60°C belassen, wobei nach 14, 30 und 50 Tagen eine Probeentnahme zur Bestimmung der wasserlöslichen Phosphorverbindungen mittels AAS erfolgte.

Die Bestimmung der Kriechstromfestigkeit (CTI) erfolgte nach DIN 112, ASTU-D 3638, Elastizitätsmodul wurde nach DIN 53 457 und die Schlagzähigkeit nach DIN 53 453 bestimmt.

Die Zusammensetzung der Formmassen und die Ergebnisse der Messungen sind der Tabelle zu entnehmen.

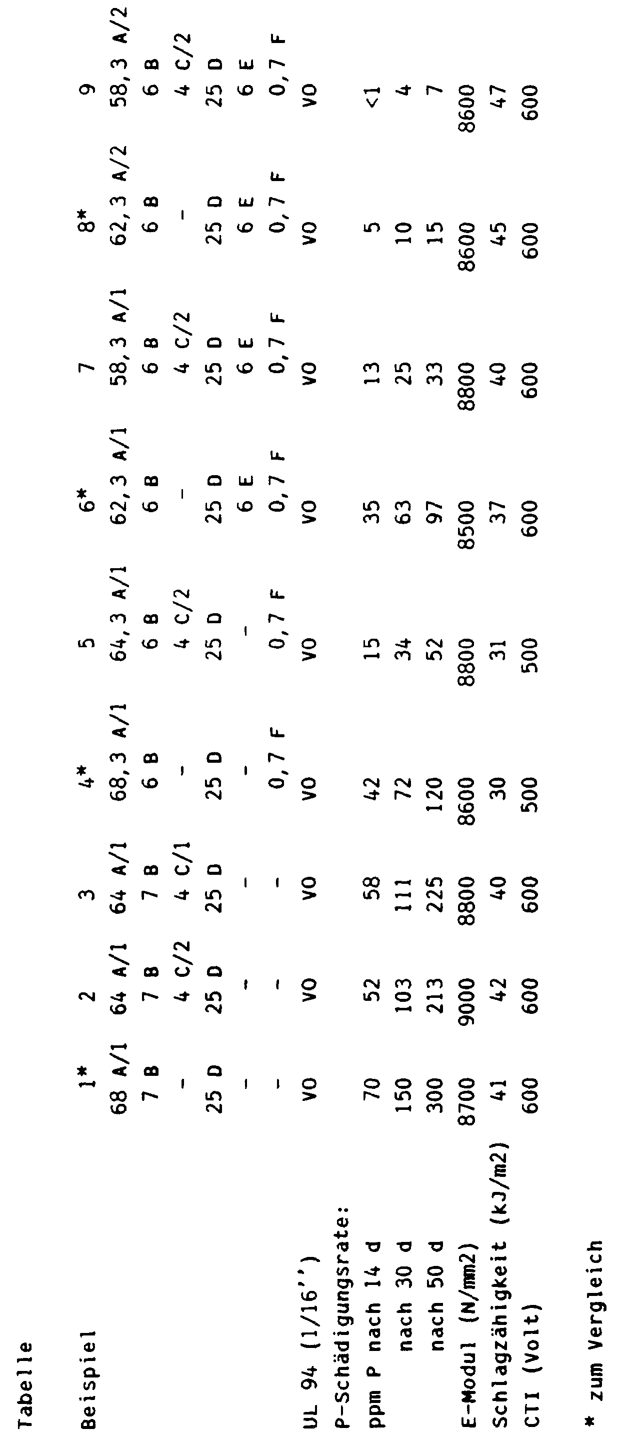

## Patentansprüche

1. Flammgeschützte thermoplastische Formmassen, enthaltend
A) 30 - 98 Gew.-% eines thermoplastischen Polyamids,
B) 1 - 30 Gew.-% Phosphor,
C) 1 - 15 Gew.-% einer monophenolischen Verbindung mit mindestens 10 C-Atomen der allgemeinen Formel I 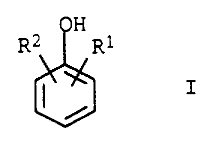 wobei
R¹, R gleiche oder verschiedene Reste Wasserstoff, ein C₁-C₁₆-Alkyl ein C₆-C₁₈-Aryl- oder ein C₇-C₂₀-Aralkylradikal bedeuten, wobei jedes der Radikale mit wenigstens einer C₁-C₁₂-Alkylgruppe oder einem Halogenatom substituiert und das Arylradikal über -O-, C₁-C₃-Alkylen oder -SO₂-Brückenglieder verbunden sein kann, oder R¹ und R miteinander verbunden sind zu einem aromatischen oder cycloaliphatischen carbocyclischen Ring
mit der Maßgabe, daß nicht beide Reste R¹ und R in o-Stellung zur phenolischen OH-Gruppe stehen,
oder diphenolische Verbindung der allgemeinen Formel II 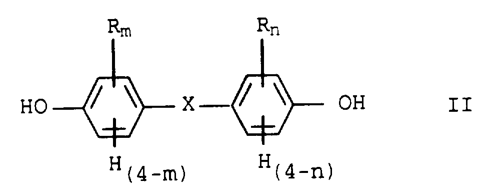 wobei
R für eine CH₃-, CH₃-O-, C₂H₅-Gruppe steht,
m und n unabhängig voneinander ganze Zahlen von 0 - 4, und
X eine chemische Bindung , einen C₁-C₇-Alkylen-, oder C₅-C₆-Cycloalkylenrest, O, S, SO, SO₂, CO oder O-(CH₂)ₚ-O-mit p = 2 - 10 bedeutet
mit der Maßgabe, daß die Summe der aliphatischen C-Atome aller an die Phenolringe gebundenen Reste R < 6, ist, oder deren Mischungen,
D) 0 - 60 Gew.-% eines faser- oder teilchenförmigen Füllstoffes oder deren Mischungen und
E) 0 - 30 Gew.-% eines kautschukelastischen Polymerisates

2. Flammgeschützte thermoplastische Formmassen nach Anspruch 1 enthaltend
A) 40 - 97 Gew.-%
B) 1 - 30 Gew.-%
C) 1 - 12 Gew.-%
D) 1 - 50 Gew.-%

3. Flammgeschützte thermoplastische Formmassen nach den Ansprüchen 1 bis 2, enthaltend als Komponente A) ein teilaromatische, teilkristallines Copolyamid mit einem Triamingehalt von unter 0,5 Gew.-% aufgebaut aus
(A₁) 20 - 90 Gew.-% Einheiten, die sich von Terephthalsäure und Hexamethylmediamin ableiten,
(A₂) 0 - 50 Gew.-% Einheiten, die sich von ε-Caprolactum ableiten,
(A₃) O - 80 Gew.-% Einheiten, die sich von Adipinsäure und Hexamethylendiamin ableiten,
(A₄) O - 40 Gew.-% weiteren polyamidbildenden Monomeren
wobei der Anteil der Komponenten (A₂) oder (A₃) oder (A₄) oder deren Mischungen mindestens 10 Gew.-% beträgt.

4. Flammgeschützte thermoplastische Formmassen nach den Ansprüchen 1 bis 3, enthaltend als monophenolische Verbindung C) Tetrahydronaphthol, 2-Buthyl-phenol (sk. und tert.), 4-t-Butylphenyol, Thymol, 4-tert.-Pentylphenol, Octylphenol(gemische), Nonylphenol(gemische), Dodecylphenol(gemische), 4-Hydroxydiphenyl, 2-Hydroxydiphenyl, mit Alkylgruppen substituierte Hydroxydiphenyle, 1-Naphthol, 2-Naphthol, Benzylphenol(e), Benzyl-Kresol(e), 2-Phenyl-2-(4-hydroxyphenyl)-propan, 4-Hydroxydiphenylsulfon, 4-Hydroxydiphenylether, 2- oder 4-Cyclohexylphenole oder deren Mischungen.

5. Flammgeschützte thermoplastische Formmassen nach den Ansprüchen 1 bis 3, enthaltend als diphenolische Verbindungen C), in denen R für eine Methylgruppe steht, m und n 0 bis 2 bedeuten und X -CH₂-, -C(CH₃)₂-oder -SO₂-bedeutet.

6. Verwendung der flammgeschützten thermoplastischen Formmassen gemäß den Ansprüchen 1 bis 5 zur Herstellung von Folien, Fasern und Formkörpern.

7. Formkörper, erhältlich aus flammgeschützten thermoplastischen Formmassen gemäß den Ansprüchen 1 bis 5.

## Claims

1. A flameproofed thermoplastic molding material containing
A) 30-98% by weight of a thermoplastic polyamide,
B) 1-30% by weight of phosphorus,
C) 1-15% by weight of a monophenolic compound of not less than 10 carbon atoms of the formula I 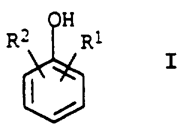 where R¹ and R are identical or different and are each hydrogen, C₁-C₁₆-alkyl, C₆-C₁₈-aryl or C₇-C₂₀-aralkyl, where each of the radicals may be substituted by at least one C₁-C₁₂-alkyl group or one halogen atom and the aryl radical may be bonded via -O-, -C₁-C₃-alkylene- or -SO₂- bridge members, or R¹ and R are bonded to one another to form an aromatic or cycloaliphatic carbocyclic ring, with the proviso that both radicals R¹ and R may not be ortho to the phenolic OH group, or of a diphenolic compound of the formula II 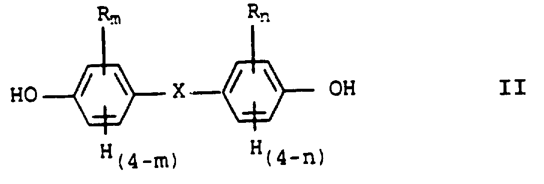 where R is CH₃-, CH₃-O- or C₂H₅-, m and n independently of one another are each an integer of from 0 to 4, and X is a chemical bond, C₁-C₇-alkylene, C₅- or C₆-cycloalkylene, O, S, SO, SO₂, CO or O-(CH₂)ₚ-O- in which p is 2-10, with the proviso that the sum of the aliphatic carbon atoms of all radicals R bonded to a phenol ring is < 6, or of a mixture thereof,
D) 0-60% by weight of a fibrous or particulate filler or of a mixture thereof and
E) 0-30% by weight of an elastomeric polymer.

2. A flameproofed thermoplastic molding material as claimed in claim 1, containing
40-97% by weight of A),
1-30% by weight of B),
1-12% by weight of C) and
1-50% by weight of D).

3. A flameproofed thermoplastic molding material as claimed in claim 1 or 2, containing, as component A), a partly aromatic, semicrystalline copolyamide having a triamine content of less than 0.5% by weight and based on
(A₁) 20-90% by weight of units which are derived from terephthalic acid and hexamethylenediamine,
(A₂) 0-50% by weight of units which are derived from ε-caprolactam,
(A₃) 0-80% by weight of units which are derived from adipic acid and hexamethylenediamine and
(A₄) 0-40% by weight of further polyamide-forming monomers,
the amount of components (A₂) or (A₃) or (A₄) or of mixtures thereof being at least 10% by weight.

4. A flameproofed thermoplastic molding material as claimed in any of claims 1 to 3, containing, as monophenolic compound C), tetrahydronaphthol, 2-butylphenol (sec or tert), 4-tert-butylphenol, thymol, 4-tert-pentylphenol, octylphenol (mixture), nonylphenol (mixture), dodecylphenol (mixture), 4-hydroxybiphenyl, 2-hydroxybiphenyl, alkyl-substituted hydroxybiphenyls, 1-naphthol, 2-naphthol, benzylphenol(s), benzylcresol(s), 2-phenyl-2-(4-hydroxyphenyl)-propane, 4-hydroxydiphenyl sulfone, 4-hydroxydiphenyl ether, 2- or 4-cyclohexylphenols or mixtures thereof.

5. A flameproofed thermoplastic molding material as claimed in any of claims 1 to 3, containing a diphenolic compound C) in which R is methyl, m and n are each from 0 to 2 and X is -CH₂-, -C(CH₃)₂- or -SO₂-.

6. The use of a flameproofed thermoplastic molding material as claimed in any of claims 1 to 5 for the production of films, fibers and moldings.

7. A molding obtainable from a flameproofed thermoplastic molding material as claimed in any of claims 1 to 5.

## Revendications

1. Mélanges à mouler thermoplastiques ignifugés contenant
A) de 30 à 98 % en poids d'un polyamide thermoplastique,
B) de 1 à 30 % en poids de phosphore,
C) de 1 à 15 % en poids d'un composé monophénolique ayant au moins 10 atomes de carbone, de formule générale I 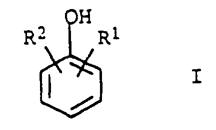 dans laquelle
R¹ et R sont des radicaux identiques ou différents et représentent chacun un hydrogène, un radical alkyle en C₁-C₁₆, aryle en C₁₆-C₁₈ ou aralkyle en C₇-C₂₀, chacun des radicaux étant substitué par au moins un groupe alkyle en C₁-C₁₂ ou un atome d'halogène, le radical aryle pouvant être lié par l'intermédiaire de chaînons pontants -O-, alkylène en C₁-C₃ ou -SO₂-, ou encore R¹ et R sont liés l'un à l'autre pour former un noyau carbocyclique aromatique ou cycloaliphatique,
du moment que les deux radicaux R¹ et R ne se trouvent pas en position ortho par rapport au groupe OH phénolique,
ou bien un composé diphénolique de formule générale II 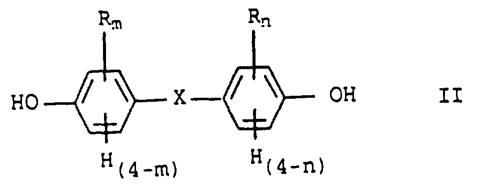 dans laquelle
R est un groupe CH₃, CH₃-O, C₂H₅,
m et n, indépendamment l'un de l'autre, sont des nombres entiers de 0 à 4, et
X est une liaison chimique, un radical alkylène en C₁-C₇ ou cycloalkylène en C₅-C₆, O, S, SO, SO₂, CO ou O-(CH₂)ₚ-O, où p vaut de 2 à 10,
du moment que le nombre total des atomes de carbone aliphatiques de l'ensemble des radicaux R liés aux noyaux phénoliques est inférieur à 6,
ou leurs mélanges,
D) de 0 à 60 % en poids d'une matière de charge, fibreuse ou particulaire, ou leurs mélanges, et
E) de 0 à 30 % en poids d'un polymère caoutchouteux.

2. Mélanges à mouler thermoplastiques ignifugés selon la revendication 1, contenant
A) de 40 à 97 % en poids
B) de 1 à 30 % en poids
C) de 1 à 12 % en poids
D) de 1 à 50 % en poids.

3. Mélanges à mouler thermoplastiques ignifugés selon les revendications 1 et 2, contenant comme constituant A) un copolyamide partiellement aromatique, partiellement cristallin, ayant une teneur en triamine inférieure à 0,5 % en poids, et ayant la constitution suivante :
(A₁) de 20 à 90 % en poids de motifs qui dérivent de l'acide téréphtalique et de l'hexaméthylènediamine,
(A₂) de 0 à 50 % en poids de motifs qui dérivent de l'ε-caprolactame,
(A₃) de 0 à 80 % en poids de motifs qui dérivent de l'acide adipique et de l'hexaméthylènediamine,
(A₄) de 0 à 40 % en poids d'autres monomères formant des polyamides,
la part des constituants (A₂) ou (A₃) ou (A₄) ou de leurs mélanges étant d'au moins 10 % en poids.

4. Mélanges à mouler thermoplastiques ignifugés selon les revendications 1 à 3, contenant comme composé monophénolique C) du tétrahydronaphtol, du 2-butylphénol (secondaire ou tertiaire), du 4-tert-butylphénol, du thymol, du 4-tert-pentylphénol, un octylphénol ou leurs mélanges, un nonylphénol ou leurs mélanges, un dodécylphénol ou leurs mélanges, du 4-hydroxydiphényle, du 2-hydroxydiphényle, des hydroxydiphényles alkylés, du 1-naphtol, du 2-naphtol, un ou plusieurs benzylphénols, un ou plusieurs benzylcrésols, du 2-phényl-2-(4-hydroxyphényl)propane, de la 4-hydroxydiphénylsulfone, de l'oxyde de 4-hydroxydiphényle, des 2- ou 4-cyclohexylphénols ou leurs mélanges.

5. Mélanges à mouler thermoplastiques ignifugés selon les revendications 1 à 3, contenant comme composés diphénoliques C) ceux dans lesquels R est un groupe méthyle, m et n valent de 0 à 2, et X est -CH₂-, -C(CH₃)₂- ou -SO₂-.

6. Utilisation des mélanges à mouler thermoplastiques ignifugés selon les revendications 1 à 5 pour fabriquer des feuilles, des fibres ou des objets façonnés.

7. Objets façonnés que l'on peut préparer à partir de mélanges à mouler thermoplastiques ignifugés selon les revendications 1 à 5.
